# FASCICULE DE BREVET EUROPEEN

(11) **EP 0 712 709 B1**
(45) Date de publication et mention de la délivrance du brevet: **08.03.2000**
(21) Numéro de dépôt: 95402585.4
(22) Date de dépôt: 17.11.1995
(51) Int. Cl.: B29C 45/14, B29C 45/16, F16D 66/02

(54) **Procédé de réalisation d'un témoin d'usure de garniture de friction surmoulé**
Verfahren zur Herstellung eines umgossenen Verschleissanzeigers für Bremsbelag
Method for manufacturing an overmoulded wear indicator for brake lining

(30) Priorité: 18.11.1994 FR 9413831
(43) Date de publication de la demande: 22.05.1996
(73) Titulaire: COMPAGNIE PLASTIC OMNIUM Société Anonyme dite:, 69007 Lyon (FR)
(72) Inventeur: Belin, Francois, F-52200 Langres (FR); Schosseler, René, F-95100 Argenteuil (FR)
(74) Mandataire: Leszczynski, André

(56) Documents cités:
- EP-A- 0 547 867
- EP-A- 0 578 352
- GB-A- 2 112 316
- US-A- 4 235 832
- PATENT ABSTRACTS OF JAPAN vol. 15 no. 466 (P-1280) ,26 Novembre 1991 & JP-A-03 199902 (SUMITOMO WIRING SYSTEMS)

## Description

La présente invention concerne un procédé de réalisation d'un témoin d'usure de garniture de friction surmoulé selon le préambule commun des revendications indépendantes 1 et 3, destiné à être monté notamment sur des plaquettes de frein de véhicules automobiles. La présente invention concerne également un témoin d'usure de garniture de friction selon le préambule commun des revendications indépendantes 5 et 6.

On sait que les témoins d'usure de garniture de friction sont des pièces qui doivent présenter une bonne étanchéité tout au long de la durée de vie des garnitures de friction, de manière à éviter un allumage intempestif du système de détection relié aux témoins d'usure, qui est destiné à avertir d'un état d'usure avancée d'une garniture de friction.

Cette exigence est d'autant plus rigoureuse que les garnitures de friction, notamment celles qui sont montées sur des plaquettes de frein de véhicules automobiles, sont soumises à des conditions de température et d'humidité qui sont particulièrement propices à la dégradation des témoins d'usure.

Du document EP-A-0 547 867, on connaît un procédé pour réaliser un témoin d'usure de garniture de friction selon le préambule commun des revendications indépendantes 1 et 3 comportant un corps obtenu par surmoulage d'une matière plastique sur un élément de positionnement dans lequel est engagée l'extrémité d'un fil conducteur électrique.

Du même document, on connait un témoin d'usure de garniture de friction correspondant au préambule commun des revendications indépendantes 5 et 6.

La présente invention vise à proposer un autre procédé de ce type, dans lequel un tel élément de positionnement n'est pas nécessaire, ce qui est avantageux du fait que l'élément de positionnement décrit dans EP-A-0 547 867 doit être coupé après réalisation du corps par surmoulage, opération qui peut être complexe et nécessiter un outillage particulier.

La présente invention a pour objet un procédé de réalisation d'un témoin d'usure de garniture de friction selon la revendication indépendante 1, ainsi qu'un procédé selon la revendication indépendante 3.

Selon un mode de mise en oeuvre particulier, on immobilise l'extrémité du fil conducteur électrique à l'aide de moyens de centrage, on surmoule l'extrémité du fil conducteur électrique ainsi immobilisé en réalisant une pièce intermédiaire en matière plastique comportant une partie enveloppant le fil conducteur électrique et de laquelle dépassent les moyens de centrage, et une partie de préhension, on saisit la pièce intermédiaire par sa partie de préhension et l'on retire les moyens de centrage.

On peut alors surmouler la partie allongée de ladite pièce intermédiaire pour constituer le corps du témoin d'usure, en maintenant la pièce intermédiaire par sa partie de préhension.

Avantageusement, on utilise des matières plastiques différentes pour effectuer le premier et le second surmoulage.

A titre d'exemple, la pièce intermédiaire peut-être réalisée en un polyamide, tandis que le corps du témoin d'usure peut être réalisé en polyétheréthercétone, en un polymère à cristaux liquides ou en un polyamide aromatique.

Dans le procédé selon la revendication indépendante 3, on enduit la paroi extérieure du fil conducteur électrique d'une matière qui durcit en séchant et forme une gaine rigidifiant le fil pour son surmoulage.

A cet effet, on peut utiliser une colle ou une résine que l'on dépose sur le fil conducteur électrique et que l'on fait prendre tandis que l'on maintient le fil en position rectiligne.

Une fois la colle ou la résine durcie, on maintient le fil par une extrémité de la gaine ainsi obtenue et l'on surmoule l'autre extrémité de la gaine, ainsi que l'extrémité du fil conducteur électrique.

La présente invention a également pour objets un témoin d'usure de garniture de friction selon la revendication indépendante 5 et un témoin d'usure de garniture de friction selon la revendication indépendante 6.

Dans ce mode de mise en oeuvre, la gaine constitue la pièce intermédiaire au sens de l'invention.

Dans le but de mieux faire comprendre l'invention, on va en décrire maintenant deux modes de mise en oeuvre donnés à titre d'exemples non limitatifs en référence au dessin annexé dans lequel :
- la figure 1 est une vue schématique en perspective d'une garniture de friction montée sur une plaquette de frein,
- la figure 2 représente en perspective une partie d'un premier moule utilisable pour mettre en oeuvre la première étape de surmoulage du procédé selon un premier mode de mise en oeuvre de l'invention,
- la figure 3 est une vue en coupe selon III-III du moule de la figure 2 refermé sur un fil conducteur électrique,
- la figure 4 est une vue analogue à la figure 2 après surmoulage du fil conducteur électrique, lequel est représenté en coupe partielle,
- la figure 5 représente en perspective une partie d'un second moule utilisable pour mettre en oeuvre la deuxième étape de surmoulage du procédé, et
- la figure 6 est une vue analogue à la figure 5 après mise en oeuvre complète du procédé, le témoin d'usure étant représenté en coupe partielle.

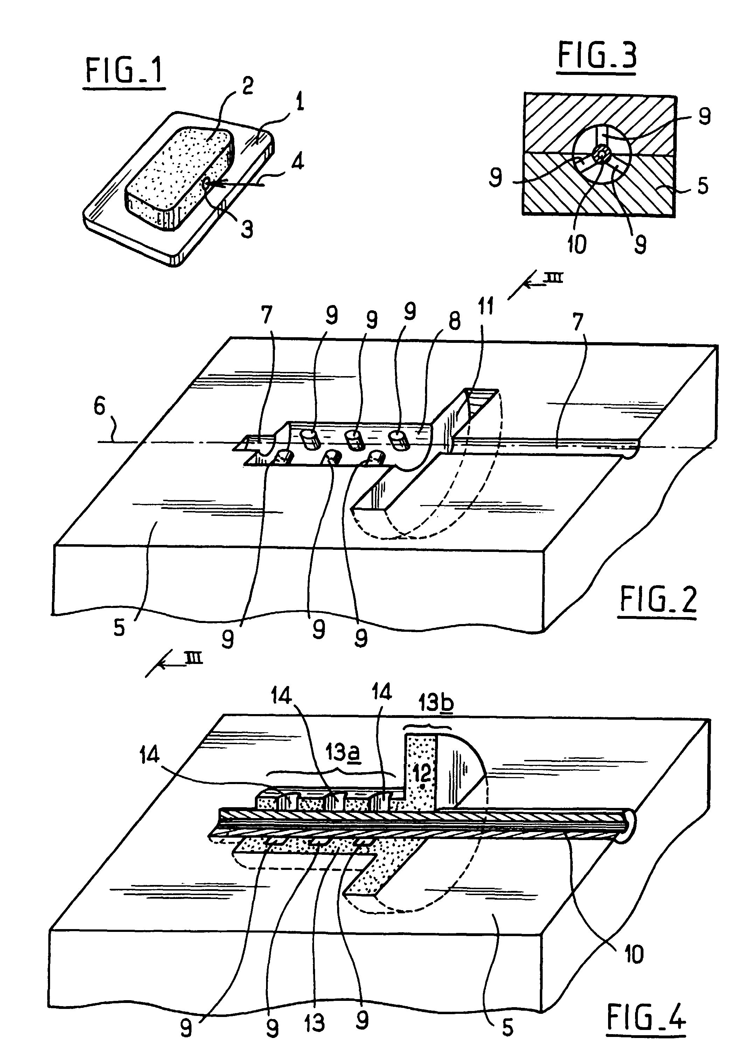

La plaquette de frein représentée sur la figure 1 comporte une plaque support 1 et une garniture de friction 2.

Un orifice 3 est ménagé sur le côté de la garniture de friction 2, parallèlement à sa surface d'usure.

Cet orifice 3 est destiné à recevoir un témoin d'usure comme indiqué par la flèche 4.

Sur les figures 2 à 4, l'empreinte du premier moule dont seule une moitié 5 est représentée, se compose de trois cavités cylindriques concentriques et contigues dont l'axe 6 se situe dans le plan de joint du moule.

La première cavité est un canal 7 de petit diamètre destiné à recevoir un fil conducteur électrique s'étendant sur toute la longueur de l'empreinte.

La deuxième cavité est une portion de cylindre 8 de plus grand diamètre définissant une partie cylindrique de la pièce à surmouler, qui est destinée à envelopper le fil conducteur électrique.

La portion de cylindre 8 renferme des picots de centrage 9 qui ont pour fonction de maintenir le fil conducteur électrique 10 dans l'axe 6 de l'empreinte du moule, comme on le voit sur la vue en coupe de la figure 3.

La troisième cavité 11 de l'empreinte présente la forme d'un disque de grand diamètre, contigu à la portion de cylindre 8.

Pour réaliser le surmoulage, on met en place le fil conducteur électrique 10, formé d'une âme conductrice et d'une gaine isolante, dans le premier moule, en le maintenant par les picots de centrage 9 et l'on referme le moule en rapprochant ses deux parties comme illustré à la figure 3.

On injecte ensuite une première matière plastique 12 telle qu'un polyamide qui vient remplir l'empreinte du moule pour constituer une pièce intermédiaire 13 comme représenté sur la figure 4.

Cette pièce intermédiaire 13 comporte une partie allongée 13a et une partie de préhension 13b en forme de disque.

On constate qu'après démoulage, les picots de centrage 9 laissent libres, dans la partie allongée 13a, des orifices 14 qui mettent le fil conducteur électrique 10 en contact direct avec le milieu extérieur.

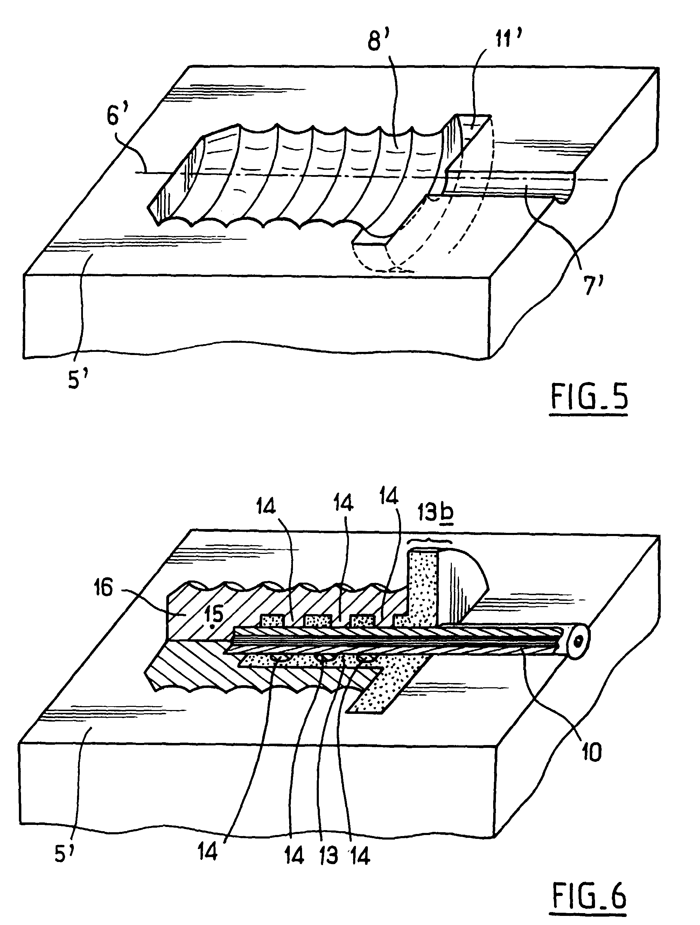

La pièce intermédiaire 13 est ensuite placée dans un second moule dont une partie 5' est représentée sur la figure 5.

Ce second moule définit une empreinte formée de trois parties cylindriques concentriques dont l'axe 6' est compris dans le plan de joint du moule.

Un canal de petit diamètre 7' est destiné à recevoir le fil conducteur électrique 10, une cavité annelée sensiblement cylindrique 8' définit la forme extérieure du corps du témoin d'usure à réaliser et une troisième partie 11' en forme de disque, identique à la cavité 11 du premier moule et contigue à la partie 8', est destinée à recevoir la partie de préhension 13b de la pièce intermédiaire 13.

La pièce intermédiaire 13 est ainsi immobilisée dans le moule 5' grâce à sa partie de préhension 13b qui prend place dans la cavité 11'.

Après fermeture du moule, on injecte une seconde matière plastique 15 telle qu'un polymère à cristaux liquides qui vient remplir la cavité annelée 8' et forme le corps 16 du témoin d'usure.

On constate, sur la figure 6, que la seconde matière plastique 15 vient surmouler la partie allongée de la pièce intermédiaire 13 en remplissant notamment les orifices 14.

Ainsi, le fil conducteur électrique 10 est à la fois parfaitement isolé de l'extérieur et parfaitement centré par rapport au corps du témoin d'usure ainsi réalisé.

Il est bien entendu que les modes de mise en oeuvre qui viennent d'être décrits ne présentent aucun caractère limitatif et qu'ils pourront recevoir toute modification désirable sans sortir pour cela du cadre de l'invention tel que défini dans les revendications.

## Revendications

1. Procédé de réalisation d'un témoin d'usure de garniture de friction comportant un corps obtenu par surmoulage de l'extrémité d'un fil conducteur électrique, selon lequel on applique sur l'extrémité du fil conducteur électrique (10) une pièce intermédiaire (13) comportant une partie allongée (13a) apte à maintenir le fil conducteur électrique (10) et une partie de préhension (13b) et l'on surmoule l'extrémité du fil conducteur électrique (10) ainsi que la partie allongée (13a) de ladite pièce intermédiaire (13) en maintenant cette dernière par sa partie de préhension (13b) pour réaliser le corps (16) du témoin d'usure, caractérisé par le fait que l'on réalise la pièce intermédiaire (13) par surmoulage de l'extrémité du fil conducteur électrique (10).

2. Procédé selon la revendication 1, caractérisé par le fait que l'on immobilise l'extrémité du fil conducteur électrique (10) à l'aide de moyens de centrage (9), on surmoule l'extrémité du fil conducteur électrique (10) ainsi immobilisé en réalisant une pièce intermédiaire (13) en matière plastique comportant une partie (13a) enveloppant le fil conducteur électrique et de laquelle dépassent les moyens de centrage (9) et une partie de préhension (13b), on saisit la pièce intermédiaire par sa partie de préhension, on retire les moyens de centrage, et l'on surmoule la partie allongée (13a) de la pièce intermédiaire (13) pour constituer le corps (16) du témoin d'usure.

3. Procédé de réalisation d'un témoin d'usure de garniture de friction comportant un corps obtenu par surmoulage de l'extrémité d'un fil conducteur électrique, selon lequel on applique sur l'extrémité du fil conducteur électrique (10) une pièce intermédiaire (13) comportant une partie allongée (13a) apte à maintenir le fil conducteur électrique (10) et une partie de préhension (13b) et l'on surmoule l'extrémité du fil conducteur électrique (10) ainsi que la partie allongée (13a) de ladite pièce intermédiaire (13) en maintenant cette dernière par sa partie de préhension (13b) pour réaliser le corps (16) du témoin d'usure, caractérisé par le fait que l'on réalise la pièce intermédiaire (13) par enduction de la paroi extérieure de l'extrémité du fil conducteur électrique (6).

4. Procédé selon l'une quelconque des revendications 1 à 3, caractérisé par le fait que le corps (16) du témoin d'usure est réalisé en polyétheréthercétone, en un polymère à cristaux liquides ou en un polyamide aromatique.

5. Témoin d'usure de garniture de friction comportant un corps surmoulé sur l'extrémité d'un fil conducteur électrique, une pièce intermédiaire (13) placée autour du fil conducteur électrique (10), ladite pièce intermédiaire comportant une partie allongée (13a) apte à maintenir le fil conducteur électrique (10) et une partie de préhension (13b), le corps (16) du témoin d'usure étant surmoulé sur la partie allongée (13a) de la pièce intermédiaire et sur l'extrémité du fil conducteur électrique (10), caractérisé par le fait que la pièce intermédiaire (13) est surmoulée sur l'extrémité du fil conducteur électrique.

6. Témoin d'usure de garniture de friction comportant un corps surmoulé sur l'extrémité d'un fil conducteur électrique, une pièce intermédiaire (13) placée autour du fil conducteur électrique (10), ladite pièce intermédiaire comportant une partie allongée (13a) apte à maintenir le fil conducteur électrique (10) et une partie de préhension (13b), le corps (16) du témoin d'usure étant surmoulé sur la partie allongée (13a) de la pièce intermédiaire et sur l'extrémité du fil conducteur électrique (10), caractérisé par le fait que la pièce intermédiaire (13) est une gaine obtenue par enduction de la paroi extérieure de l'extrémité du fil conducteur électrique avec une matière qui durcit en séchant.

## Patentansprüche

1. Verfahren zur Herstellung einer Nachweiseinrichtung für die Abnutzung von Reibbelägen, mit einem Gehäuse, das durch Umspritzen eines elektrisch leitenden Drahtes erhalten ist, bei welchem Verfahren man auf dem Endbereich des elektrisch leitenden Drahtes (10) ein Vorprodukt (13) anbringt, das ein längliches Teilstück (13a), welches für den Halt des elektrisch leitenden Drahtes ausgelegt ist, und einen Greifbereich (13b) aufweist, und dass man den Endbereich des elektrisch leitenden Drahtes (10) und das längliche Teilstück (13a) des Vorprodukts (13) umspritzt, wobei man letzteres an seinem Greifbereich (13b) hält, um so das Gehäuse (16) der Nachweiseinrichtung herzustellen, dadurch gekennzeichnet, dass man das Vorprodukt (13) durch Umspritzen des Endbereiches des elektrisch leitenden Drahtes (10) erhält.

2. Verfahren nach Anspruch 1, dadurch gekennzeichnet, dass man den Endbereich des elektrisch leitenden Drahtes (10) fixiert mittels eines Zentriermittels (9), dass man den Endbereich des so fixierten elektrisch leitenden Drahtes (10) umspritzt und dabei ein Vorprodukt (13) aus Kunststoff erhält, das einen den elektrisch leitenden Draht umhüllenden Bereich (13a) hat und von dem die Zentriermittel vorstehen und das einen Greifbereich (13b) hat, dass man das Vorprodukt an seinem Greifbereich ergreift, dass man die Zentriermittel zurückzieht und dass man das längliche Teilstück (13a) des Vorprodukts (13) umspritzt, um so das Gehäuse (13) der Nachweiseinrichtung zu erhalten.

3. Verfahren zur Herstellung einer Nachweiseinrichtung für die Abnutzung von Reibbelägen, mit einem Gehäuse, das durch Umspritzen eines elektrisch leitenden Drahtes erhalten ist, bei welchem Verfahren man auf dem Endbereich des elektrisch leitenden Drahtes (10) ein Vorprodukt (13) anbringt, das ein längliches Teilstück (13a), welches für den Halt des elektrisch leitenden Drahtes ausgelegt ist, und einen Greifbereich (13b) aufweist, und dass man den Endbereich des elektrisch leitenden Drahtes (10) und das längliche Teilstück (13a) des Vorprodukts (13) umspritzt, wobei man letzteres an seinem Greifbereich (13b) hält, um so das Gehäuse (16) der Nachweiseinrichtung herzustellen, dadurch gekennzeichnet, dass man das Vorprodukt (13) durch Beschichten der äusseren Wand des Endbereichs des elektrisch leitenden Drahtes (6) erhält.

4. Verfahren nach einem der Ansprüche 1 bis 3, dadurch gekennzeichnet, dass das Gehäuse (16) der Nachweiseinrichtung aus Polyätherketon, aus einen Polymeren mit Flüssigkristallen oder aus einem aromatischen Polyamiden gefertigt ist.

5. Nachweiseinrichtung eines Reibbelags mit einem Gehäuse, das auf einen Endbereich eines elektrisch leitenden Drahtes aufgespritzt ist, mit einem Vorprodukt (13), das um den elektrisch leitenden Draht (10) angeordnet ist, wobei dieses Vorprodukt ein längliches Teilstück (13a), das für ein Halten des elektrisch leitenden Drahtes (10) ausgelegt ist, und einen Griffbereich (13b) hat, dabei ist das Gehäuse (16) der Nachweiseinrichtung auf das längliche Teilstück (13a) des Vorprodukts und auf den Endbereich des elektrisch leitenden Drahtes (10) aufgespritzt, dadurch gekennzeichnet, dass das Vorprodukt (13) auf den Endbereich des elektrisch leitenden Drahtes aufgespritzt ist.

6. Nachweiseinrichtung eines Reibbelags mit einem Gehäuse, das auf einen Endbereich eines elektrisch leitenden Drahtes aufgespritzt ist, mit einem Vorprodukt (13), das um den elektrisch leitenden Draht (10) angeordnet ist, wobei dieses Vorprodukt ein längliches Teilstück (13a), das für ein Halten des elektrisch leitenden Drahtes (10) ausgelegt ist, und einen Griffbereich (13b) hat, dabei ist das Gehäuse (16) der Nachweiseinrichtung auf das längliche Teilstück (13a) des Vorprodukts und auf den Endbereich des elektrisch leitenden Drahtes (10) aufgespritzt, dadurch gekennzeichnet, dass das Vorprodukt (13) eine Hülle ist, die durch Beschichten des Aussenmantels des Endbereiches des elektrisch leitenden Drahtes mit einem Stoff erhalten ist, der beim Trocknen härtet.

## Claims

1. Method of producing a friction-lining wear indicator comprising a body obtained by overmoulding the end of an electrical conductor wire, in which method an intermediate piece (13), having an elongate part (13a) capable of holding the electrical conductor wire (10) in place and a gripping part (13b), is applied to the end of the electrical conductor wire (10), and the end of the electrical conductor wire (10) and the elongate part (13a) of the said intermediate piece (13) are overmoulded, holding the latter in place by its gripping part (13b), in order to produce the body (16) of the wear indicator, characterized in that the intermediate piece (13) is produced by overmoulding the end of the electrical conductor wire (10).

2. Method according to Claim 1, characterized in that the end of the electrical conductor wire (10) is immobilized with the aid of centring means (9), the end of the electrical conductor wire (10) thus immobilized is overmoulded, producing an intermediate piece (13) made of plastic, having a part (13a) which surrounds the electrical conductor wire and from which the centring means (9) and a gripping part (13b) project, the intermediate piece is gripped by its gripping part, the centring means are removed, and the elongate part (13a) of the intermediate piece (13) is overmoulded in order to form the body (16) of the wear indicator.

3. Method of producing a friction-lining wear indicator having a body obtained by overmoulding the end of an electrical conductor wire, in which method an intermediate piece (13), having an elongate part (13a) capable of holding the electrical conductor wire (10) in place and a gripping part (13b), is applied to the end of the electrical conductor wire (10), and the end of the electrical conductor wire (10) and the elongate part (13a) of the said intermediate piece (13) are overmoulded, holding the latter in place by its gripping part (13b), in order to produce the body (16) of the wear indicator, characterized in that the intermediate piece (13) is produced by coating the outer wall of the end of the electrical conductor wire (6).

4. Method according to any one of Claims 1 to 3, characterized in that the body (16) of the wear indicator is made of polyetheretherketone, of a liquid-crystal polymer or of an aromatic polyamide.

5. Friction-lining wear indicator comprising a body, overmoulded onto the end of an electrical conductor wire, and an intermediate piece (13) placed around the electrical conductor wire (10), the said intermediate piece having an elongate part (13a) capable of holding the electrical conductor wire (10) in place and a gripping part (13b), the body (16) of the wear indicator being overmoulded onto the elongate part (13a) of the intermediate piece and onto the end of the electrical conductor wire (10), characterized in that the intermediate piece (13) is overmoulded onto the end of the electrical conductor wire.

6. Friction-lining wear indicator comprising a body, overmoulded onto the end of an electrical conductor wire, and an intermediate piece (13) placed around the electrical conductor wire (10), the said intermediate piece having an elongate part (13a) capable of holding the electrical conductor wire (10) in place and a gripping part (13b), the body (16) of the wear indicator being overmoulded onto the elongate part (13a) of the intermediate piece and onto the end of the electrical conductor wire (10), characterized in that the intermediate piece (13) is a sheath obtained by coating the outer wall of the end of the electrical conductor wire with a material which sets on drying.
